# EUROPÄISCHE PATENTSCHRIFT

(11) **EP 3 810 946 B1**
(45) Veröffentlichungstag und Bekanntmachung des Hinweises auf die Patenterteilung: **27.04.2022**
(21) Anmeldenummer: 19732885.9
(22) Anmeldetag: 07.06.2019
(51) Int. Cl.: F16D 7/00, F16D 43/20, F16D 13/52, F16D 7/02

(54) **DREHMOMENTBEGRENZER MIT ELEKTRISCH ISOLIERENDEM SCHUTZBAUTEIL SOWIE ANTRIEBSSTRANG MIT DREHMOMENTBEGRENZER**
TORQUE LIMITER HAVING AN ELECTRICALLY INSULATING PROTECTIVE COMPONENT, AND DRIVE TRAIN HAVING A TORQUE LIMITER
LIMITEUR DE COUPLE AYANT UN COMPOSANT DE PROTECTION ÉLECTRIQUEMENT ISOLANT ET CHAÎNE CINÉMATIQUE AYANT LE LIMITEUR DE COUPLE

(30) Priorität: 22.06.2018 DE 102018115083; 14.08.2018 DE 102018119724
(43) Veröffentlichungstag der Anmeldung: 28.04.2021
(73) Patentinhaber: Schaeffler Technologies AG & Co. KG, 91074 Herzogenaurach (DE)
(72) Erfinder: VOIT, Alexander, 76547 Sinzheim (DE); KESSLER, Michael, 77815 Bühl (DE); SZIKRAI, Manuela, 77815 Bühl (DE); KIMMIG, Christoph, 76227 Karlsruhe (DE)
(86) Internationale Anmeldenummer: PCT/DE2019/100523
(87) Internationale Veröffentlichungsnummer: WO 2019/242808

(56) Entgegenhaltungen:
- WO-A1-2016/165712
- DE-A1-102007 058 552
- DE-T5-112013 002 081

## Beschreibung

Die Erfindung betrifft einen Drehmomentbegrenzer für einen Antriebsstrang eines Kraftfahrzeugs, mit einem Drehmomenteingangsbauteil zum Übertragen eines Drehmoments eines Elektromotors in Richtung eines Getriebes, mit einer Rutschkupplung mit in Reibkontakt bringbaren Lamellen zum Begrenzen von Spitzenmomenten, wobei ein Eingangslamellenträger der Rutschkupplung drehfest mit dem Drehmomenteingangsbauteil verbunden ist, und mit einem Drehmomentausgangsbauteil zum Weitergeben des Drehmoments an das Getriebe, wobei das Drehmomentausgangsbauteil drehfest mit einem Ausgangslamellenträger der Rutschkupplung verbunden ist. Die Erfindung betrifft auch einen Antriebsstrang für ein Kraftfahrzeug mit einem solchen Drehmomentbegrenzer.

Bei modernen Elektromotoren zum Antrieb von Fahrzeugen besteht oftmals die Problematik, dass die Elektromotoren über Frequenzumrichter gesteuert werden und dabei hohe Taktfrequenzen im Bereich von 20 kHz und höher eingesetzt werden, um nahezu sinusförmige Stromverläufe am Motor zu erhalten. Aufgrund dieser hohen Taktfrequenz und kurzen Schaltzeiten können bisher vernachlässigbare Kapazitäten im Elektromotor, beispielsweise zwischen einem Gehäuse und einem Läufer, dem Gehäuse und einer Wicklung sowie der Wicklung und dem Läufer, nicht mehr unberücksichtigt bleiben, da über diese kapazitive Kopplung Spannungen zwischen dem Gehäuse und dem Läufer bzw. einer Ausgangswelle des Elektromotors erzeugt werden.

Diese Spannung tritt bei Verwendung von Lagern mit metallischen Wälzkörpern an einem Lagerschmierspalt auf, so dass es bei Überschreiten einer Durchschlagsspannung des Schmierfilms an den Lagern zu einem elektrischen Durchschlag kommt. Üblicherweise werden zur Vermeidung des elektrischen Durchschlags und daraus entstehender Funkenerosion sowie daraus resultierender Schäden bis zu einem Ausfall der Lager isolierende Lager mit Keramikwälzkörpern eingesetzt. Zusätzlich besteht bei sogenannten E-Achsen oftmals eine elektrische Verbindung vom Gehäuse des Elektromotors zum Gehäuse eines Getriebes, da der Elektromotor direkt an das Getriebe angeflanscht ist und in dem Gehäuse des Getriebes integriert ist. Dadurch, dass eine Ausgangswelle des Elektromotors direkt mit der Eingangswelle des Getriebes verbunden ist, gegebenenfalls dass die Ausgangswelle und die Eingangswelle integral ausgebildet sind, können parasitäre Ströme durch die elektrische Verbindung der beiden Wellen durch das Getriebe, die im Getriebe befindlichen Lager sowie abwälzende Kontakte in Verzahnungen von einzelnen Zahnräder gehen, so dass es auch im Getriebe, an den Lagern im Getriebe sowie den Verzahnungen zu Funkenerosion kommt.

Eine weitere Problematik bei Elektrofahrzeugen besteht darin, dass elektromotorisch angetriebene Fahrzeug für den reinen Fahrbetrieb im Gegensatz zu konventionell, d.h. verbrennungsmotorisch, angetriebenen Fahrzeugen oder Hybridfahrzeugen keine Anfahrkupplung, die gleichzeitig durch Durchrutschen im Überlastfall, als sogenannte Rutschkupplung, zur Begrenzung von Stoßmomenten der Räder dient, benötigen. Solche Stoßmomente bzw. Überlastmomente, die von den Rädern in den Antriebsstrang eingeleitet werden, gibt es aber auch bei Elektrofahrzeugen, so dass der gesamte Antriebsstrang des Elektrofahrzeugs auf diese hohen Belastungen, die das Antriebsmoment um das drei- oder vierfache überschreiten können, auszulegen sind bzw. diese Belastungen zum Schutz des Antriebsstranges zu begrenzen.

Im Stand der Technik werden daher im Getriebe des Elektroantriebs isolierende Lager, z.B. mit Keramikwälzkörpern eingesetzt, um einen vorzeitigen Verschleiß der Lager zu vermeiden. Zum Schutz der Verzahnung der Zahnräder werden Schleifringe eingesetzt, die eine zuverlässige elektrische Verbindung herstellen und damit verhindern, dass der Strom über die Zahnräder und den zwischen den Zahnflanken vorhandenen Schmierfilm gehen kann. Diese Maßnahmen erfordern jedoch zusätzlichen Bauraum im Getriebe und verursachen erhöhte Kosten für die Keramikwälzkörper sowie die zusätzlich notwendigen Schleifringe. Außerdem werden die Ströme damit nicht unterbunden, sondern es wird eine Verlustleistung auf Kosten der Reichweite des Fahrzeugs erzeugt. Auch ist es, insbesondere von elektrischen Antrieben größerer Maschinen und Anlagen, bekannt, eine elektrisch isolierende Verbindung zwischen der Ausgangswelle des Elektromotors und der Eingangswelle des Getriebes herzustellen, indem isolierende Elemente, beispielsweise Elastomere, zwischen der Eingangs- und Ausgangswelle eingesetzt werden, welche jedoch Verschließteile sind und somit regelmäßig ausgewechselt werden müssen.

Der Stand der Technik hat also immer den Nachteil, dass bei elektrischen Antriebssystemen von Fahrzeugen entweder Stoß- und Überlastmoment nicht ausreichend begrenzt werden sowie elektrische Verbindungen zwischen der Ausgangswelle und der Eingangswelle zu gelassen werden oder dass bei kompakter Ausgestaltung der vorhandene Bauraum für isolierende Verbindungen nach dem Stand der Technik nicht ausreichend ist. Zusätzlich ist ein Austausch eines verschlissenen Isolationselements innerhalb des Elektromotors oder des Getriebes aufwändig und kostenintensiv.

DE 11 2013 002081 T5 zeigt einen solchen Drehmomentbegrenzer aus dem Stand der Technik.

Es ist also die Aufgabe der Erfindung, die Nachteile aus dem Stand der Technik zu vermeiden oder wenigstens zu verringern. Insbesondere ein Element bereitgestellt werden, dass sowohl eine elektrische Isolierung zwischen dem Elektromotor und dem Getriebe realisiert als auch die hohen Momente im Antriebsstrang eines Fahrzeugs, insbesondere die hohen Stoßmomente der Räder, begrenzen kann. Auch ist es Aufgabe der Erfindung, dass ein solches Element zum einen die Überlastschutzfunktion bereitstellt und zum anderen in den vorhandenen Bauraum zwischen dem Elektromotor und dem Getriebegehäuse in einer elektrischen Achse passt. Dieser zur Verfügung stehende Bauraum entspricht in radialer Richtung in etwa dem Durchmesser des Läufers und beträgt in der Regel weniger als 200 mm und in axialer Richtung bei direkt an das Getriebe angeschraubtem Elektromotor maximal 15-30 mm zwischen einem Lager des Elektromotors und einer Dichtung bzw. einem Lager der Eingangswelle.

Die Aufgabe der Erfindung wird bei einer gattungsgemäßen Vorrichtung erfindungsgemäß dadurch gelöst, dass der Ausgangslamellenträger der Rutschkupplung und das Drehmomentausgangsbauteil über ein, beispielsweise im Drehmomentenfluss und/oder in Axialrichtung und/oder in Radialrichtung, dazwischengeschaltetes Schutzbauteil voneinander elektrisch isoliert sind.

Dies hat den Vorteil, dass ein zu übertragendes Drehmoment der Ausgangswelle des Elektromotors sicher auf die Eingangswelle des Getriebes übertragen werden kann, aber gleichzeitig Stoßmomente durch den Einsatz der Rutschkupplung abgefangen werden können. Außerdem wird durch das Schutzbauteil, das zwischen der Rutschkupplung und der Eingangswelle angeordnet ist, eine elektrische Verbindung zwischen der Ausgangswelle und der Eingangswelle über die Rutschkupplung unterbunden.

Vorteilhafte Ausführungsformen sind in den Unteransprüchen beansprucht und werden nachfolgend näher erläutert.

Zudem ist es zweckmäßig, wenn als eine oder mehrere Scheiben ausgebildet ist. Dadurch kann das Schutzbauteil in einfacher Weise, beispielsweise zwischen zwei miteinander verbundenen scheibenartigen Bauteilen, in dem Drehmomentbegrenzer integriert werden.

Besonders bevorzugt ist es, wenn die Scheiben so angeordnet sind, dass sie im Drehmomentenfluss eingangslamellenträgerseitige Bauteil von ausgangslamellenträgerseitigen Bauteilen trennen bzw. voneinander beabstandet, insbesondere voneinander elektrisch isoliert, halten. So kann gewährleistet werden, dass keine elektrische Verbindung zwischen dem Drehmomentausgangsbauteil und dem Drehmomenteingangsbauteil entsteht.

Auch ist es vorteilhaft, wenn das Schutzbauteil aus einem Kunststoff und/oder aus einem faserverstärkten Kunststoff und/oder aus einem mit einem Binder beschichteten Garn aufgebaut ist. Beispielsweise hat sich eine wenige Millimeter dicke Scheibe aus einem Isolator als Schutzbauteil geeignet erwiesen. Diese kann in einer bevorzugten Ausführungsform mit zwei Mitnehmerscheiben verbunden sein, wobei eine Mitnehmerscheibe, beispielsweise ein Ausgangslamellenträger, mit der Rutschkupplung(-seinheit), die der Ausgangswelle des Elektromotors nachgeschaltet ist, verbunden ist und die andere Mitnehmerscheibe über eine Nabe oder direkt mit der Eingangswelle des Getriebes verbunden ist. Das heißt also, dass das Schutzbauteil aus einem Kunststoff, insbesondere einem Duroplast, hergestellt sein und faserverstärkt sein kann. Auch ist es möglich, wenn das Schutzbauteil aus einem mit einem Binder getränkten/beschichteten Garn gewickelt und anschließend ausgehärtet hergestellt ist, da dadurch vorteilhafterweise eine erhöhte Festigkeit in Umfangsrichtung erreicht wird. Das Schutzbauteil kann aus einem Garn und Binder, beispielsweise ähnlich einem gewickelten Reibbelag einer Kupplung, unter Weglassung aller elektrisch leitenden Komponenten wie Kupferdrähten gefertigt sein.

Vorzugsweise kann das Schutzbauteil, das auch als (erste) isolierende Scheibe oder erstes isolierendes Element bezeichnet wird, mittels Verklebung mit den beiden Mitnehmerscheiben verbunden sein. Das erste isolierende Element besitzt Durchgangslöcher und wird mittels Nieten an den Mitnehmerscheiben befestigt. Mit anderen Worten ist das erste isolierende Element mit den Mitnehmerscheiben verklebt und/oder über Niete verbunden.

Zweckmäßig ist es, wenn eine (erste) Mitnehmerscheibe mit einer Nabe, beispielsweise über eine Nietverbindung, und diese wiederum über ihre Steckverzahnung mit der Eingangswelle des Getriebes verbunden ist. Das heißt, dass die Mitnehmerscheibe direkt mit der Eingangswelle des Getriebes über eine Steckverzahnung verbunden ist.

Zudem ist es bevorzugt, wenn das Schutzbauteil eine elektrische Leitfähigkeit besitzt, die geringer als 10⁻⁸ S/m ist. Dies hat den Vorteil, dass durch das Einsetzen des Schutzbauteils bzw. der einen oder mehreren (isolierenden) Scheiben eine elektrische Isolation/Trennung der Bauteile zu beiden Seiten des Schutzbauteils erreicht werden kann.

Auch ist es von Vorteil, wenn eine erste isolierende Scheibe so zwischen dem Ausgangslamellenträger und einer drehmomentausgangsbauteilfesten Mitnehmerscheibe angeordnet ist, dass sie diese in Axialrichtung und/oder in Radialrichtung voneinander beabstandet hält. Somit trägt zum einen das Material mit einer geringen elektrischen Leitfähigkeit des Schutzbauteils und zum anderen der durch die Dicke und/oder die Anordnung des Schutzbauteils gebildeten Spalts bzw. Abstands der durch die isolierende Scheibe getrennten Bauteile dazu bei, dass die dadurch getrennten Bauteile keinen Strom übertragen können.

Hierbei hat es sich auch als Vorteil herausgestellt, wenn eine zweite isolierende Scheibe so zwischen dem Ausgangslamellenträger und einem drehmomentausgangsbauteilfesten, die Rutschkupplung zur Umgebung abdichtenden Gehäusebauteil angeordnet ist, dass sie diese in Axialrichtung und/oder in Radialrichtung voneinander beabstandet hält. In einer bevorzugten Ausführungsform ist die zweite isolierende Scheibe zwischen der ersten Mitnehmerscheibe und einer Deckscheibe, die die Rutschkupplung auf der einen Seite in Axialrichtung umgibt, angeordnet.

Ferner ist es besonders bevorzugt, wenn eine dritte isolierende Scheibe so zwischen dem Drehmomenteingangsbauteil und dem Drehmomentausgangsbauteil angeordnet ist, dass sie diese sowie drehfest mit diesen gekoppelte Bauteile, wie die Eingangswelle und die Ausgangswelle, in Axialrichtung und/oder in Radialrichtung voneinander beabstandet hält.

In einer bevorzugten Ausführungsform ist eine (zweite) Mitnehmerscheibe, d.h. ein (außenverzahnter) Ausgangslamellenträger, mit einer Steckverzahnung mit der Rutschkupplung verbunden und die Rutschkupplung ist wiederum mit der Ausgangswelle des Elektromotors verbunden. Durch die dritte isolierende Scheibe befindet sich also das Schutzbauteil zwischen dem Drehmomenteingangsbauteil und dem Drehmomentausgangsbauteil, das die Eingangswelle und die Ausgangswelle beabstandet und die Rutschkupplung axial in Position hält.

Insbesondere ist es zweckmäßig, wenn die dritte isolierende Scheibe in Axialrichtung zwischen dem Drehmomenteingangsbauteil und dem Drehmomentausgangsbauteil verspannt ist. Beispielsweise kann die dritte isolierende Scheibe über einen axialen Energiespeicher wie eine Tellerfeder oder eine Wellscheibe eingespannt sein.

Die drei isolierenden Scheiben können aus dem gleichen Material gefertigt sein. Auch ist es möglich, wenn die zweite und/oder die dritte Scheibe aus einem Thermoplast hergestellt und faserverstärkt sind. Beispielsweise kann glasfaserverstärkter Polyamid für die zweite und/oder die dritte Scheibe verwendet wird.

Zudem ist es von Vorteil, wenn das Drehmomenteingangsbauteil einen innenverzahnten oder außenverzahnten Nabenabschnitt zur Anbringung an einer Ausgangswelle des Elektromotors oder eine Öffnung zum kraft- und/oder formschlüssigen Anbringen an einem Läufer des Elektromotors aufweist. So kann der erfindungsgemäße Drehmomentbegrenzer vielfältig eingesetzt und an verschiedene Geometrien angebunden werden.

Einer vorteilhaften Weiterbildung gemäß kann eine (dritte) Mitnehmerscheibe mit der Ausgangswelle des Elektromotors über Niete, eine Verschraubung, eine Verzahnung oder eine Verstemmung verbunden sein. Wie oben beschrieben ist eine erste Mitnehmerscheibe vorzugsweise mit der Eingangswelle des Getriebes über eine Steckverzahnung axial verschiebbar verbunden. Dagegen kann die dritte Mitnehmerscheibe vorzugsweise direkt an den Läufer des Motors oder eine Schwungscheibe starr mittels Vernietung, Verschraubung angebunden sein.

Ferner ist es vorteilhaft, wenn die Rutschkupplungseinheit einen innenverzahnten Käfig bzw. einen innenverzahnten Eingangslamellenträger besitzt, der mit der dritten Mitnehmerscheibe vernietet, verklebt, verschweißt und/oder verschraubt ist. Wie oben beschrieben ist die dritte Mitnehmerscheibe vorzugsweise mit der Ausgangswelle des Elektromotors über eine Steckverzahnung verbunden. Das heißt also, dass die Rutschkupplung einen innenverzahnten Käfig aufweist, der direkt mit der Ausgangswelle des Elektromotors über eine Steckverzahnung verbunden ist.

Außerdem ist es bevorzugt, wenn der innenverzahnte Käfig an mindestens jedem zweiten Zahn eine nutförmig ausgeführte Kontur besitzt, in der vorteilhafterweise ein Sicherungsring radial und/oder axial aufgenommen werden kann, so dass ein axiales Anschlagelement durch den Sicherungsring, beispielsweise für die Deckscheibe mit Öffnungen im Außenbereich, gebildet wird. Dabei können die Öffnungen der Deckscheibe als Durchgriff für die Verzahnung des innenverzahnten Käfigs dienen. Der Verbund aus innenverzahntem Käfig bzw. Eingangslamellenträger, Deckscheibe und Sicherungsring dient der Aufnahme der inneren Bauteile der Rutschkupplung.

Auch ist es zweckmäßig, wenn mindestens eine außenverzahnte Trägerscheibe, d.h. beispielsweise ein außenverzahnter Ausgangslamellenträger bzw. die zweite Mitnehmerscheibe, zur Drehmomentübertragung mit dem innenverzahnten Käfig, d.h. dem Eingangslamellenträger, über eine Verzahnung verbunden ist. Das heißt also, dass mindestens eine innenverzahnte Trägerscheibe, d.h. ein innerverzahnter Käfig bzw. Eingangslamellenträger, mit der zweiten (außenverzahnten) Mitnehmerscheibe zur Drehmomentübertragung über eine Verzahnung verbunden ist.

Gemäß der bevorzugten Ausführungsform sind mindestens zwei Reibbeläge zwischen dem innenverzahnten Käfig, der innenverzahnten Trägerscheibe und der außenverzahnten Stützscheibe/Trägerscheibe angeordnet. Ferner ist es zweckmäßig, wenn mindestens ein Reibbelag auf die innenverzahnte Trägerscheibe oder die außenverzahnte Trägerscheibe aufgeklebt oder aufgenietet ist. Zusätzlich kann mindestens ein axialer Energiespeicher wie eine Tellerfeder zwischen der außenverzahnten Stützscheibe und der Deckscheibe angeordnet sein, um die notwendige Kraft zur Gewährleistung des konstruktiv definierten Rutschmomentes für die Überlastschutzfunktion/das Durchrutschen der Rutschkupplung sicherzustellen. Das heißt also, dass mindestens eine außenverzahnte Stützscheibe zur Drehmomentübertragung mit dem innenverzahnten Käfig verbunden ist und weiterhin der gleichmäßigen Einleitung der Kraft des axialen Energiespeichers in das Reibsystem dient.

Je nach Einbausituation kann die Rutschkupplung mit der ersten isolierenden Scheibe, d.h. dem Schutzbauteil, so angeordnet werden, dass sich in einem ersten Fall die Rutschkupplung ausgehend vom Elektromotor im Drehmomentenfluss vor dem Schutzbauteil befindet oder in einem zweiten Fall die Rutschkupplung ausgehend vom Elektromotor im Drehmomentenfluss nach dem Schutzbauteil befindet. Für den zweiten Fall werden das Drehmomenteingangsbauteil, das Drehmomentausgangsbauteil, der Eingangslamellenträger und der Ausgangslamellenträger begrifflich getauscht.

Die Aufgabe der Erfindung wird auch durch einen Antriebsstrang für ein Kraftfahrzeug gelöst, mit einem Elektromotor, der eine Ausgangswelle zum Weitergeben eines von dem Elektromotor erzeugten Drehmoments aufweist, einem erfindungsgemäßen Drehmomentbegrenzer, wobei das Drehmomenteingangsbauteil des Drehmomentbegrenzers drehmomentübertragend mit der Ausgangswelle gekoppelt ist, und mit einem Getriebe, das eine von der Ausgangswelle separate Eingangswelle aufweist, wobei die Eingangswelle drehmomentübertragend mit dem Drehmomentausgangsbauteil des Drehmomentbegrenzers gekoppelt ist.

Mit anderen Worten betrifft die Erfindung eine Rutschkupplung mit einem Schutzbauteil, das anstelle einer Verbindungswelle zwischen dem Elektromotor und dem Getriebe bei Aufteilung dieser Verbindungswelle in zwei Teilwellen diese beiden Teilwellen verbindet.

Die Erfindung wird nachfolgend mit Hilfe von Zeichnungen erläutert. Es zeigen:
Fig. 1 eine Längsschnittdarstellung eines erfindungsgemäßen elektrisch isolierten Drehmomentbegrenzers in einem ersten Ausführungsbeispiel,
Fig. 2 einen vergrößerten Ausschnitt II aus Fig. 1,
Fig. 3 einen vergrößerten Ausschnitt III aus Fig. 1,
Fig. 4 eine Vorderansicht des Drehmomentbegrenzers im Halbschnitt,
Fig. 5 eine vergrößerte Darstellung eines Ausschnitts V aus Fig. 4,
Fig. 6 eine Rückansicht des Drehmomentbegrenzers,
Fig. 7 eine perspektivische Rückansicht des Drehmomentbergenzers in einem zweiten Ausführungsbeispiel,
Fig. 8 eine perspektivische Vorderansicht des Drehmomentbergenzers aus Fig. 7,
Fig. 9 eine Längsschnittdarstellung des Drehmomentbegrenzers in einem dritten Ausführungsbeispiel,
Fig. 10 eine Rückansicht des Drehmomentbergenzers aus Fig. 9,
Fig. 11 eine Vorderansicht des Drehmomentbergenzers aus Fig. 9, und
Fig. 12 eine schematische Darstellung eines Antriebsstrangs mit dem Drehmomentbegrenzer aus Fig. 9.

Die Figuren sind lediglich schematischer Natur und dienen ausschließlich dem Verständnis der Erfindung. Die gleichen Elemente sind mit denselben Bezugszeichen gekennzeichnet. Merkmal der unterschiedlichen Ausführungsbeispiele können untereinander ausgetauscht werden.

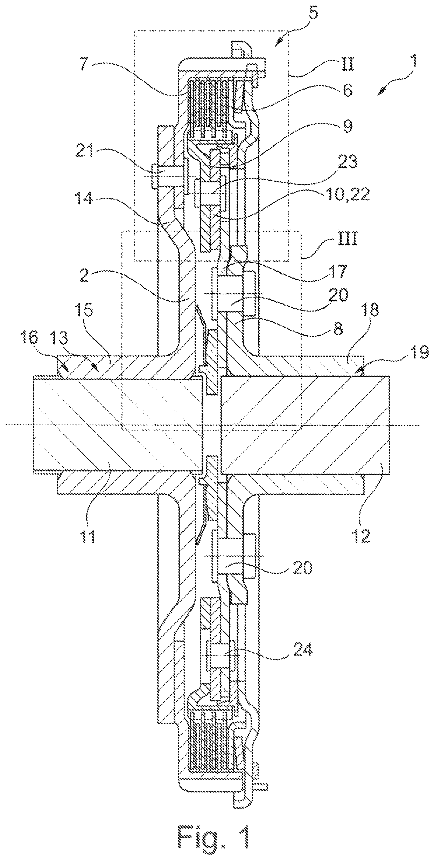

Fig. 1 zeigt ein erstes Ausführungsbeispiel eines erfindungsgemäßen Drehmomentbegrenzers 1 für einen Antriebsstrang eines Kraftfahrzeugs. Der Drehmomentbegrenzer 1 weist ein Drehmomenteingangsbauteil 2 zum Übertragen eines Drehmoments eines Elektromotors 3 in Richtung eines Getriebes 4 auf. Der Drehmomentbegrenzer 1 weist eine Rutschkupplung 5 zum Begrenzen von Spitzenmomenten auf, die als eine Lamellenkupplung mit in Reibkontakt bringbaren Lamellen 6 ausgebildet ist. Dabei ist ein Eingangslamellenträger 7 drehfest mit dem Drehmomenteingangsbauteil 2 verbunden. Der Drehmomentbegrenzer 1 weist ein Drehmomentausgangsbauteil 8 zum Weitergeben des Drehmoments an das Getriebe 4 auf. Das Drehmomentausgangsbauteil 8 ist drehfest mit einem Ausgangslamellenträger 9 der Rutschkupplung 5 verbunden. Der Drehmomentenfluss ist also wie folgt: Das Drehmoment wird von dem Elektromotor 3 erzeugt und über das Drehmomenteingangsbauteil 2 an die Rutschkupplung 5 weitergegeben. Von der Rutschkupplung 5 wird das Drehmoment über das Drehmomentausgangsbauteil 8 an das Getriebe 4 weitergegeben.

Erfindungsgemäß ist ein elektrisch isolierendes Schutzbauteil 10 im Drehmomentenfluss zwischen der Rutschkupplung 5 und dem Drehmomentausgangsbauteil 8, insbesondere zwischen dem Ausgangslamellenträger 9 und dem Drehmomentausgangsbauteil 8, angeordnet.

In Fig. 1 sind der Elektromotor 3 und das Getriebe 4 nicht dargestellt. Das von dem Elektromotor 3 erzeugte Drehmoment wird über eine außenverzahnte Ausgangswelle 11 an das Drehmomenteingangsbauteil 2 übertragen. Die Ausgangswelle 11 bildet also die Verbindung zu dem Elektromotor 3. Das Drehmoment wird über das Drehmomentausgangsbauteil 8 an eine außenverzahnte Eingangswelle 12 übertragen. Die Eingangswelle 12 ist mit dem Getriebe 4 verbunden. Die Ausgangswelle 11 und die Eingangswelle 12 sind als zwei voneinander separate Wellen ausgebildet. Die Ausgangswelle 11 und die Eingangswelle 12 sind koaxial zueinander angeordnet und im Wesentlichen mit dem gleichen Durchmesser ausgebildet. Die Ausgangswelle 11 und die Eingangswelle 12 sind in Axialrichtung voneinander beabstandet, so dass keine direkte elektrisch leitende Verbindung dazwischen entsteht.

Das Drehmomenteingangsbauteil 2 ist mit einer Innenverzahnung 13 versehen und weist eine Mitnehmerscheibe 14 und eine innenverzahnte Nabe 15 auf. Die Mitnehmerscheibe 14 und die Nabe 15 sind einteilig/integral ausgeführt. Die Mitnehmerscheibe 14 und die Nabe 15 können auch separat voneinander ausgebildet sein und über eine Vernietung, Verschraubung, Verstemmung, Schweißverbindung oder eine Klebeverbindung miteinander verbunden sein. Die Nabe 15 ist über eine Welle-Nabe-Verbindung 16 auf der Ausgangswelle 11 angebracht. Die Welle-Nabe-Verbindung 16 kann als eine Steckverzahnung, bei der die Nabe 15 axial gegenüber der Ausgangswelle 11 verschieblich ist, oder als eine axialfeste Verbindung ausgebildet sein.

Das Drehmomentausgangsbauteil 8 weist eine Mitnehmerscheibe 17 und eine innenverzahnte Nabe 18 auf. Die Mitnehmerscheibe 17 und die Nabe 18 sind voneinander separat ausgebildet. Die Nabe 18 ist über eine Welle-Nabe-Verbindung 19 auf der Eingangswelle 12 angebracht. Die Welle-Nabe-Verbindung 19 kann als eine Steckverzahnung, bei der die Nabe 18 axial gegenüber der Eingangswelle 12 verschieblich ist, oder als eine axialfeste Verbindung ausgebildet sein. Die Mitnehmerscheibe 17 und die Nabe 18 sind über eine Vernietung, Verschraubung, Verstemmung, Schweißverbindung oder eine Klebeverbindung miteinander verbunden. In dem dargestellten Ausführungsbeispiel sind die Mitnehmerscheibe 17 und die Nabe 18 über ein Niet 20 verbunden. Die Mitnehmerscheibe 17 und die Nabe 18 können auch integral/einteilig ausgeführt sein.

Die Mitnehmerscheibe 14 ist mit dem Eingangslamellenträger 7, der auch als ein innenverzahnter Käfig bezeichnet werden kann, über eine Vernietung, Verschraubung, Verstemmung, Schweißverbindung oder eine Klebeverbindung verbunden. Der Eingangslamellenträger 7 dient als ein Eingangselement der Rutschkupplung 5. In dem dargestellten Ausführungsbeispiel sind die Mitnehmerscheibe 14 und der Eingangslamellenträger 7 über ein Niet 21 verbunden. Die Mitnehmerscheibe 14 und der Eingangslamellenträger 7 können auch einteilig/integral ausgeführt sein.

Der Ausgangslamellenträger 9, der auch als außenverzahnte Mitnehmerscheibe bezeichnet werden kann, dient als ein Ausgangselement der Rutschkupplung 5. Zwischen dem Ausgangslamellenträger 9 und der Mitnehmerscheibe 17 ist eine isolierende Scheibe 22 angeordnet, die als das Schutzbauteil 10 dient.

Die Scheibe 22 ist über Niete 23 mit dem Ausgangslamellenträger 9 und über Niete 24 mit der Mitnehmerscheibe 17 verbunden. Die Niete 23, 24 sind über den Umfang gesehen abwechselnd angeordnet. Zusätzlich kann die Scheibe 22 mit dem Ausgangslamellenträger 9 und/oder mit der Mitnehmerscheibe 17 in einem jeweiligen Kontaktbereich, in dem die Bauteile aneinander anliegen, verklebt sein.

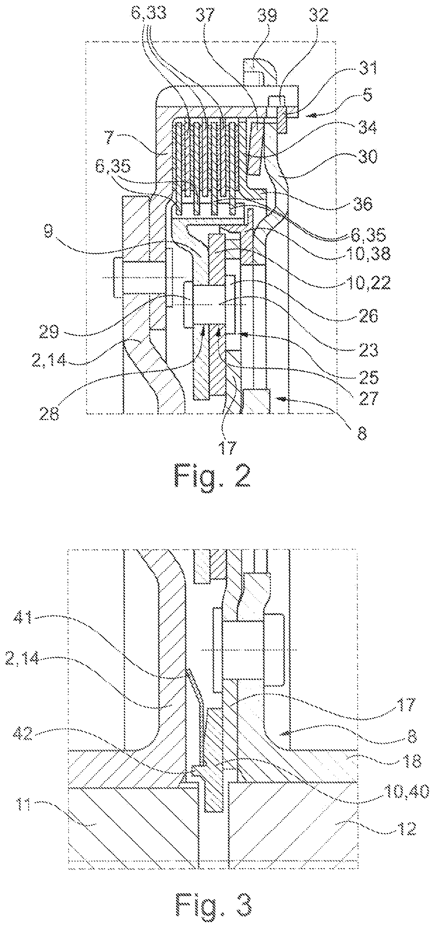

Fig. 2 zeigt eine vergrößerte Darstellung des Ausschnitts II aus Fig. 1. Der Niet 23 durchgreift ein Durchgangsloch 25 in der Mitnehmerscheibe 17, so dass ein Setzkopf 26 des Niets 23 in dem Durchgangsloch 25 angeordnet ist und an der Scheibe 22 anliegt. Der Niet 23 durchgreift das Durchgangsloch 27 der Scheibe 22 und das Durchgangsloch 28 des Ausgangslamellenträgers 9, so dass ein Schließkopf 29 des Niets 23 an dem Ausgangslamellenträger 9 anliegt. Das Durchgangsloch 27 und das Durchgangsloch 28 weisen einen ähnlichen Durchmesser auf, d.h. der Unterschied ist kleiner gleich 0,5 mm. Der Durchmesser des Durchgangslochs 25 ist größer als der Durchmesser des Durchgangslochs 27, beispielsweise entspricht der Durchmesser des Durchgangslochs 25 dem Durchmesser des Setzkopf 26 plus der doppelten Dicke der Scheibe 22, so dass ein Spalt zur elektrischen Isolation, der etwa der Dicke der Scheibe 22 entspricht, zwischen dem Niet 23 und der Mitnehmerscheibe 17 gebildet wird.

Die Rutschkupplung 5 wird auf der einen axialen Seite von dem Eingangslamellenträger 7 und auf der anderen axialen Seite von einer Deckscheibe 30 umgeben. Die Deckscheibe 30 wird in Axialrichtung durch einen Sicherungsring 31, der an seinem radialen Außenumfang in eine Nut 32 in dem Eingangslamellenträger 7 eingreift. Eine Drehmomentübertragung zwischen dem Eingangslamellenträger 7 und dem Ausgangslamellenträger 9 erfolgt über Außenlamellen 33 des Eingangslamellenträgers 7, eine außenverzahnte Stützscheibe 34 des Eingangslamellenträgers 7, Innenlamellen 35 des Ausgangslamellenträgers 9 und Reibbeläge zwischen den Innenlamellen 35 und den Außenlamellen 33. Die Reibbeläge können aufgeklebt oder aufgenietet sein. Die Reibbeläge können an den Innenlamellen 35 oder an den Außenlamellen 33 und der Stützscheibe 34 und die Innenseite des Eingangslamellenträgers 7 oder wechselseitig aufgebracht sein. Die Stützscheibe 34 weist einen axial nach außen abstehenden Kragen 36 zur Versteifung auf. Die Innenlamellenverzahnung sowie die Außenlamellenverzahnung sind mit Radial- und Flankenspiel ausgelegt. In Axialrichtung zwischen der Deckscheibe 30 und der Stützscheibe 34 ist eine Tellerfeder 37 zum Aufbringen einer axialen Vorspannkraft angeordnet. Die Tellerfeder 37 liegt an ihrem äußeren Auflagedurchmesser an der Deckscheibe 30 und an ihrem inneren Auflagedurchmesser an der Stützscheibe 34 an. Die Tellerfeder 37 kann auch umgekehrt eingebaut werden.

Zwischen der Mitnehmerscheibe 17 und der Deckscheibe 30 ist eine zweite isolierende Scheibe 38 angeordnet, die auch als das Schutzbauteil 10 dient. Die Scheibe 38 ist axialfest und drehfest an dem Ausgangslamellenträger 9 angebracht. Die Deckscheibe weist einen axial nach innen hervorstehenden Kragen 39 zur Versteifung auf.

Fig. 3 zeigt eine vergrößerte Darstellung des Ausschnitts III aus Fig. 1. In Axialrichtung zwischen der Mitnehmerscheibe 14 und der Mitnehmerscheibe 17 ist eine isolierende Scheibe 40 angeordnet, um die Ausgangswelle 11 und die Eingangswelle 12 in Axialrichtung beabstandet zu halten und voneinander elektrisch zu isolieren. Die ringförmige Scheibe 40 hat einen Innendurchmesser, der geringer ist als der Außendurchmesser der Ausgangswelle 11 und der Eingangswelle 12. Die Scheibe 40 ist in Axialrichtung durch eine Tellerfeder 41 vorgespannt, so dass die Scheibe 40 gegen die Mitnehmerscheibe 17 gedrückt wird. Die Scheibe 40 kann sich auch direkt an der Nabe 18 bzw. dem Drehmomentausgangsbauteil 8 abstützen. Die Scheibe 40 besitzt einen Zentrierkragen 42, der in Axialrichtung zu der Mitnehmerscheibe 14 hervorsteht. Der Innendurchmesser der Tellerfeder 41 liegt auf dem Außendurchmesser des Zentrierkragens 42 auf, so dass das Element radial in Position gehalten wird. Die Tellerfeder 41 besitzt mehrere Abstützzungen, die an der Mitnehmerscheibe 14 anliegen und sich dort in Axialrichtung abstützen. Die Tellerfeder 41 besitzt mehrere Einhängezungen 44, die in Axialrichtung zu der Mitnehmerscheibe 14 hervorstehen, und in korrespondierende Aussparungen 45 in der Mitnehmerscheibe 14 eingreifen.

Die beschriebene Rutschkupplung 1 dient zur Aufbringung eines konstruktiv bestimmten Reib- bzw. Rutschmoments. Zusätzlich dazu liefert aber auch die radial weiter innenliegende Reibeinrichtung, die aus der Scheibe 40 und der Scheibe 38 gebildet wird, unter Wirkung der Axialkraft der Tellerfeder 41 eine Reibmoment, das sich in der Gesamtwirkung der Einheit zum Reibmoment der Rutschkupplung 5 addiert. Somit ergeben sich innerhalb der Einheit zwei Rutscheinheiten, die die Überlastschutzfunktion durch Bereitstellung eines Summenreibmomentes gewährleisten.

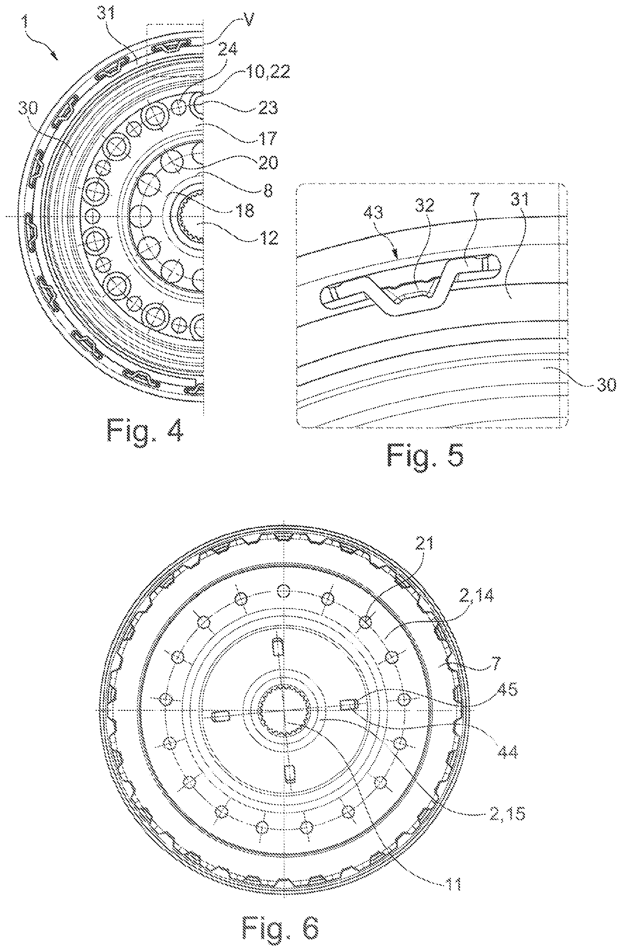

Fig. 4 zeigt eine Vorderansicht des Drehmomentbegrenzers 1 im Halbschnitt. Die Niete 20 verbinden die Nabe 18 und die Mitnehmerscheibe 17, die gemeinsam als das Drehmomentausgangsbauteil 8 dienen. Die Niete 23, 24 verbinden wechselseitig die Scheibe 22 mit der Mitnehmerscheibe 17 und mit dem Ausgangslamellenträger 9.

Fig. 5 zeigt eine vergrößerte Darstellung eines Ausschnitts V aus Fig. 4. Der Sicherungsring 31 wird radial an mindestens zwei Zähnen des Eingangslamellenträgers 7 in der Nut 32 geführt. Im hier dargestellten Fall wechseln sich sichtbare Zähne, die durch die Deckscheibe 30 hindurchgreifen, mit nicht sichtbaren Zähne des Eingangslamellenträgers 7 ab. Zu diesem Zweck besitzt die Deckscheibe 30 Öffnungen 43 für den Durchgriff der Zähne.

Fig. 6 zeigt eine Rückansicht des Drehmomentbegrenzers 1. Die Tellerfeder 41 besitzt mehrere Einhängezungen 44, die in Axialrichtung zu der Mitnehmerscheibe 14 hervorstehen, und in korrespondierende Aussparungen 45 in der Mitnehmerscheibe 14 eingreifen. Dadurch wird die Tellerfeder in Umfangsrichtung zentriert. Das konstruktiv vorgesehene Spiel zur Gewährleistung von Montierbarkeit und Zentrierfunktion beträgt zwischen einer Einhängezunge 44 der Tellerfeder 41 und einer Aussparung 45 der Mitnehmerscheibe 14 üblicherweise 0 bis 0,5 mm. Die Reihe der Niete 21 verbindet den Eingangslamellenträger 7 mit der Mitnehmerscheibe 14.

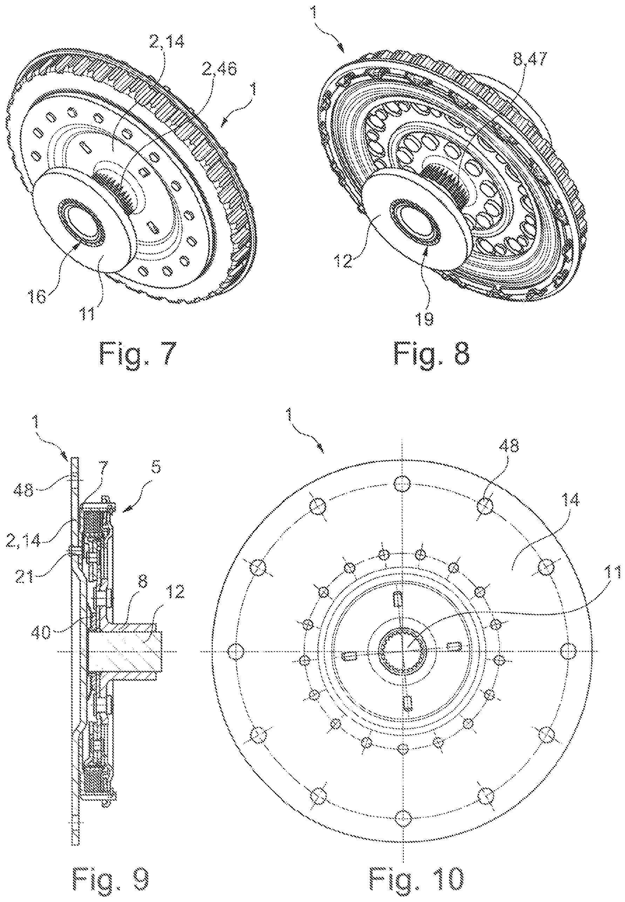

Fig. 7 zeigt eine perspektivische Rückansicht eines zweiten Ausführungsbeispiels des Drehmomentbergenzers 1. Die Rutschkupplung 5 entspricht in ihrem Aufbau der Rutschkupplung 5 in dem ersten Ausführungsbeispiel. Im Unterschied zu dem ersten Ausführungsbeispiel ist die Ausgangswelle 11 innenverzahnt ausgebildet und das Drehmomenteingangsbauteil 2 als eine außenverzahnte Nabe 46 und die Mitnehmerscheibe 14 ausgebildet. Die Ausgangswelle 11 ist die als Steckverbindung ausgeführte Welle-Nabe-Verbindung 16 mit der Nabe 46 verbunden.

Fig. 8 zeigt eine perspektivische Vorderansicht des zweiten Ausführungsbeispiels des Drehmomentbergenzers 1 aus Fig. 7. Die Eingangswelle 12 ist innenverzahnt ausgebildet und das Drehmomentausgangsbauteil 8 als eine außenverzahnte Nabe 47 ausgebildet. Die Eingangswelle 12 ist über die als Steckverbindung ausgeführte Welle-Nabe-Verbindung 19 mit der Nabe 47 verbunden.

Fig. 9 zeigt eine Längsschnittdarstellung eines dritten Ausführungsbeispiels des Drehmomentbegrenzers 1. Die Rutschkupplung 5 entspricht in ihrem Aufbau der Rutschkupplung 5 in dem ersten Ausführungsbeispiel. Im Unterschied zu dem ersten Ausführungsbeispiel besitzt das Drehmomenteingangsbauteil 2 anstelle der radial innenliegenden Verbindung zur Ausgangswelle 11 einen radial nach außengezogenen Bereich zur direkten Anbindung an den Elektromotor 3, beispielsweise an einen Läufer des Elektromotors 3. Die Mitnehmerscheibe 14 weist in einem radial äußeren Bereich Öffnungen 48 auf, an denen die Mitnehmerscheibe 14 mit dem Elektromotor 3 verbunden werden kann. Die Mitnehmerscheibe 14 ist über die Niete 21 fest mit dem Eingangslamellenträger 7 verbunden. Während der Montage des Drehmomentbegrenzers 1 erfolgt zunächst die Befestigung am Elektromotor 3. Danach wird beim Zusammenbau des Elektromotors 3 und des Getriebes 4 das Drehmomentausgangsbauteil 8 auf die Eingangswelle 12 gesteckt. Aufgrund der festen Anbindung der Mitnehmerscheibe 14 an den Elektromotor 3 ist es nicht erforderlich, dass die ringförmige Scheibe 40 einen kleineren Innendurchmesser als der Außendurchmesser der Eingangswelle 12 besitzt.

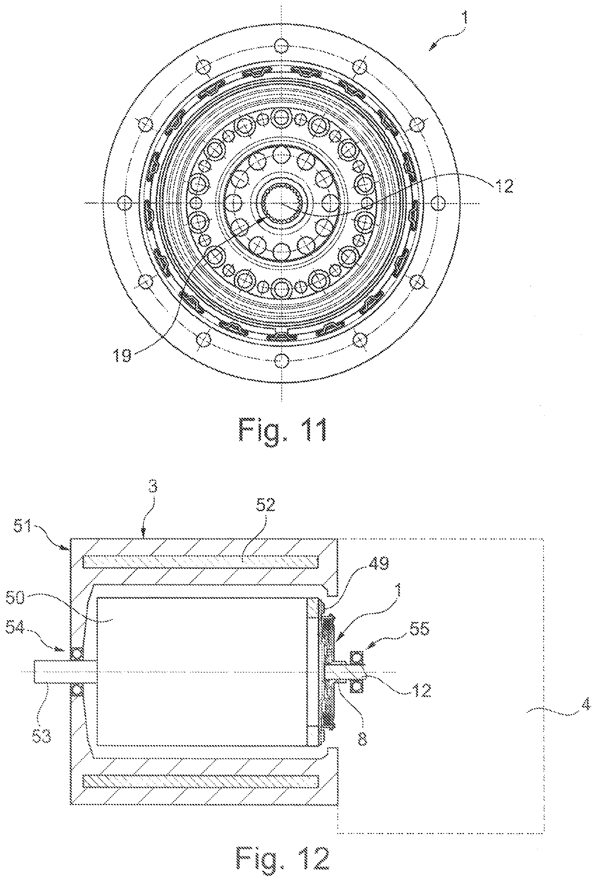

Fig. 10 zeigt eine Rückansicht des dritten Ausführungsbeispiels. Die Mitnehmerscheibe 14 hat im äußeren Bereich die über den Umfang gleichverteilten Öffnungen 48, mindestens aber zwei Öffnungen 48, zur Befestigung am Elektromotor 3. Fig. 11 zeigt eine Vorderansicht des dritten Ausführungsbeispiels. Die Drehmomentübertragung zwischen dem Drehmomentausgangsbauteil 8 und der Eingangswelle 12 erfolgt über die als Steckverbindung ausgeführte Welle-Nabe-Verbindung 19.

Fig. 12 zeigt den Drehmomentbegrenzer 1 aus Fig. 9, der in dem Antriebsstrang verbaut ist. Der Drehmomentbegrenzer ist dazu mit Schrauben 49 an einen Läufer 50 des Elektromotors 3 angeschraubt und somit in den Elektromotor 3 integriert. Vom Elektromotor sind ein Gehäuse 51, eine Wicklung 52, der Läufer 50 und ein Welle 53 auf der dem Getriebe 4 abgewandten Seite mit einer Wellenlagerung 54 dargestellt. Dieses Lager kann isolierend z.B. mit Keramikwälzkörpern ausgeführt sein. Der Drehmomentbegrenzer 1 ist mit dem Drehmomentausgangsbauteil 8 auf der Eingangswelle 12 des Getriebes 4 gelagert und stellt somit die Lagerung für den Läufer 50 auf der Getriebeseite dar. Eine Lagerung 55 der Eingangswelle 12 kann mit herkömmlichen Lagern ausgeführt sein. Die Komponenten des Elektromotors 3 sind hier nur schematisch und nicht maßstäblich dargestellt.

### Bezugszeichenliste

- 1: Drehmomentbegrenzer
- 2: Drehmomenteingangsbauteil
- 3: Elektromotor
- 4: Getriebe
- 5: Rutschkupplung
- 6: Lamellen
- 7: Eingangslamellenträger
- 8: Drehmomentausgangsbauteil
- 9: Ausgangslamellenträger
- 10: Schutzbauteil
- 11: Ausgangswelle
- 12: Eingangswelle
- 13: Innenverzahnung
- 14: Mitnehmerscheibe
- 15: Nabe
- 16: Welle-Nabe-Verbindung
- 17: Mitnehmerscheibe
- 18: Nabe
- 19: Welle-Nabe-Verbindung
- 20: Niet
- 21: Niet
- 22: isolierende Scheibe
- 23: Niet
- 24: Niet
- 25: Durchgangsloch
- 26: Setzkopf
- 27: Durchgangsloch
- 28: Durchgangsloch
- 29: Schließkopf
- 30: Deckscheibe
- 31: Sicherungsring
- 32: Nut
- 33: Außenlamellen
- 34: Stützscheibe
- 35: Innenlamellen
- 36: Kragen
- 37: Tellerfeder
- 38: isolierende Scheibe
- 39: Kragen
- 40: isolierende Scheibe
- 41: Tellerfeder
- 42: Zentrierkragen
- 43: Öffnung
- 44: Einhängezunge
- 45: Aussparung
- 46: Nabe
- 47: Nabe
- 48: Öffnung
- 49: Schraube
- 50: Läufer
- 51: Gehäuse
- 52: Wicklung
- 53: Welle
- 54: Lagerung
- 55: Lagerung

## Patentansprüche

1. Drehmomentbegrenzer (1) für einen Antriebsstrang eines Kraftfahrzeugs, mit einem Drehmomenteingangsbauteil (2) zum Übertragen eines Drehmoments eines Elektromotors (3) in Richtung eines Getriebes (4), mit einer Rutschkupplung (5) mit in Reibkontakt bringbaren Lamellen (6) zum Begrenzen von Spitzenmomenten, wobei ein Eingangslamellenträger (7) der Rutschkupplung (5) drehfest mit dem Drehmomenteingangsbauteil (2) verbunden ist, und mit einem Drehmomentausgangsbauteil (8) zum Weitergeben des Drehmoments an das Getriebe (4), wobei das Drehmomentausgangsbauteil (8) drehfest mit einem Ausgangslamellenträger (9) der Rutschkupplung (5) verbunden ist, **dadurch gekennzeichnet, dass** der Ausgangslamellenträger (9) der Rutschkupplung (5) und das Drehmomentausgangsbauteil (8) und/oder der Eingangslamellenträger (7) der Rutschkupplung und das Drehmomenteingangsbauteil (2) über ein dazwischengeschaltetes Schutzbauteil (10) voneinander elektrisch isoliert sind.

2. Drehmomentbegrenzer (1) nach Anspruch 1, **dadurch gekennzeichnet, dass** das Schutzbauteil (10) als eine oder mehrere Scheiben (22, 38, 40) ausgebildet ist.

3. Drehmomentbegrenzer (1) nach Anspruch 1 oder 2, **dadurch gekennzeichnet, dass** das Schutzbauteil (10) aus einem Kunststoff und/oder aus einem faserverstärkten Kunststoff und/oder aus einem mit einem Binder beschichteten Garn aufgebaut ist.

4. Drehmomentbegrenzer (1) nach einem der Ansprüche 1 bis 3, **dadurch gekennzeichnet, dass** das Schutzbauteil (10) eine elektrische Leitfähigkeit besitzt, die geringer als 10⁻⁸ S/m ist.

5. Drehmomentbegrenzer (1) nach einem der Ansprüche 1 bis 4, **dadurch gekennzeichnet, dass** eine erste isolierende Scheibe (22) so zwischen dem Ausgangslamellenträger (9) und einer drehmomentausgangsbauteilfesten Mitnehmerscheibe (17) angeordnet ist, dass sie diese in Axialrichtung und/oder in Radialrichtung voneinander beabstandet hält.

6. Drehmomentbegrenzer (1) nach einem der Ansprüche 1 bis 5, **dadurch gekennzeichnet, dass** eine zweite isolierende Scheibe (38) so zwischen dem Ausgangslamellenträger (9) und einem drehmomentausgangsbauteilfesten, die Rutschkupplung (5) zur Umgebung abdichtenden Gehäusebauteil (14) angeordnet ist, dass sie diese in Axialrichtung und/oder in Radialrichtung voneinander beabstandet hält.

7. Drehmomentbegrenzer (1) nach einem der Ansprüche 1 bis 6, **dadurch gekennzeichnet, dass** eine dritte isolierende Scheibe (40) so zwischen dem Drehmomenteingangsbauteil (2) und dem Drehmomentausgangsbauteil (8) angeordnet ist, dass sie diese sowie drehfest mit diesen gekoppelten Bauteilen (11, 12, 14, 17) in Axialrichtung und/oder in Radialrichtung voneinander beabstandet hält.

8. Drehmomentbegrenzer (1) nach Anspruch 7, **dadurch gekennzeichnet, dass** die dritte isolierende Scheibe (40) in Axialrichtung zwischen dem Drehmomenteingangsbauteil (2) und dem Drehmomentausgangsbauteil (8) verspannt ist.

9. Drehmomentbegrenzer (1) nach einem der Ansprüche 1 bis 8, **dadurch gekennzeichnet, dass** das Drehmomenteingangsbauteil (2) einen innenverzahnten oder außenverzahnten Nabenabschnitt (15) zur Anbringung an einer Ausgangswelle (11) des Elektromotors (3) oder eine Öffnung (48) zum kraft- und/oder formschlüssigen Anbringen an einem Läufer (50) des Elektromotors (3) aufweist.

10. Antriebsstrang für ein Kraftfahrzeug, mit einem Elektromotor (3), der eine Ausgangswelle (11) zum Weitergeben eines von dem Elektromotor (3) erzeugten Drehmoments aufweist, einem Drehmomentbegrenzer (1) nach einem der Ansprüche 1 bis 9, wobei das Drehmomenteingangsbauteil (2) des Drehmomentbegrenzers (1) drehmomentübertragend mit der Ausgangswelle (11) gekoppelt ist, und mit einem Getriebe (4), das eine von der Ausgangswelle (11) separate Eingangswelle (12) aufweist, wobei die Eingangswelle (12) drehmomentübertragend mit dem Drehmomentausgangsbauteil (8) des Drehmomentbegrenzers (1) gekoppelt ist.

## Claims

1. A torque limiter (1) for a drive train of a motor vehicle, having a torque input component (2) for transmitting a torque of an electric motor (3) in the direction of a transmission (4), a slip clutch (5) having discs (6) that can be brought into frictional contact for the purpose of limiting peak torques, wherein an input disc carrier (7) of the slip clutch (5) is connected to the torque input component (2) in a rotationally fixed manner, and a torque output component (8) for relaying the torque to the transmission (4), wherein the torque output component (8) is connected to an output disc carrier (9) of the slip clutch (5) in a rotationally fixed manner, **characterised in that** the output disc carrier (9) of the slip clutch (5) and the torque output component (8) and/or the input disc carrier (7) of the slip clutch and the torque input component (2) are electrically insulated from one another via a protective component (10) interposed there between.

2. The torque limiter (1) according to claim 1, **characterised in that** the protective component (10) is formed as one or more plates (22, 38, 40).

3. The torque limiter (1) according to claim 1 or 2, **characterised in that** the protective component (10) is constructed from a plastic and/or a fibre-reinforced plastic and/or from a binder-coated yarn.

4. The torque limiter (1) according to any one of claims 1 to 3, **characterised in that** the protective component (10) has an electrical conductivity that is less than 10⁻⁸ S/m.

5. The torque limiter (1) according to any one of claims 1 to 4, **characterised in that** a first insulated plate (22) is arranged between the output disc carrier (9) and an entrainer plate (17) fixed to the torque output component in such a way that it holds these spaced apart from one another in the axial direction and/or in the radial direction.

6. The torque limiter (1) according to any one of claims 1 to 5, **characterised in that** a second insulating plate (38) is arranged between the output disc carrier (9) and a housing component (14) which is fixed to the torque output component and seals the slip clutch (5) from the surroundings in such a way that it holds these spaced apart from one another in the axial direction and/or in the radial direction.

7. The torque limiter (1) according to any one of claims 1 to 6, **characterised in that** a third insulating plate (40) is arranged between the torque input component (2) and the torque output component (8) in such a way that they and components (11, 12, 14, 17) coupled to them in a rotationally fixed manner are held spaced apart from one another in the axial direction and/or in the radial direction.

8. The torque limiter (1) according to claim 7, **characterised in that** the third insulating plate (40) is braced in the axial direction between the torque input component (2) and the torque output component (8).

9. The torque limiter (1) according to any one of claims 1 to 8, **characterised in that** the torque input component (2) has an internally toothed or an externally toothed hub section (15) for attaching to an output shaft (11) of the electric motor (3) or an opening (48) for force-fitting and/or form-fitting attachment to a rotor (50) of the electric motor (3).

10. A drive train for a motor vehicle, having an electric motor (3), which has an output shaft (11) for transmitting a torque generated by the electric motor (3), a torque limiter (1) according to any one of claims 1 to 9, wherein the torque input component (2) of the torque limiter (1) is coupled to the output shaft (11) in a torque-transmitting manner, and a transmission (4) that has an input shaft (12) separate from the output shaft (11), wherein the input shaft (12) is coupled to the torque output component (8) of the torque limiter (1) in a torque-transmitting manner.

## Revendications

1. Limiteur de couple (1) pour une chaîne cinématique d'un véhicule à moteur, comprenant un composant d'entrée de couple (2) pour transmettre un couple d'un moteur électrique (3) dans la direction d'une boîte de vitesses (4), comprenant un embrayage à friction (5) comprenant des disques (6) pouvant être mis en contact par friction pour limiter les couples crêtes, dans lequel un support de disques d'entrée (7) de l'embrayage à friction (5) est relié solidaire en rotation avec le composant d'entrée de couple (2) et comprenant un composant de sortie de couple (8) pour transmettre le couple à la boîte de vitesses (4), le composant de sortie de couple (8) étant relié solidaire en rotation avec un support de disques de sortie (9) de l'embrayage à friction (5), **caractérisé en ce que** le support de disques de sortie (9) de l'embrayage à friction (5) et le composant de sortie de couple (8) et/ou le support de disques d'entrée (7) de l'embrayage à friction et le composant d'entrée de couple (2) sont isolés électriquement les uns des autres au moyen d'un composant de protection (10) monté entre eux.

2. Limiteur de couple (1) selon la revendication 1, **caractérisé en ce que** le composant de protection (10) est conçu sous la forme d'un ou de plusieurs disques (22, 38, 40).

3. Limiteur de couple (1) selon la revendication 1 ou 2, **caractérisé en ce que** le composant de protection (10) est fabriqué en plastique et/ou en plastique renforcé de fibres et/ou en fil revêtu d'un liant.

4. Limiteur de couple (1) selon l'une quelconque des revendications 1 à 3, **caractérisé en ce que** le composant de protection (10) possède une conductivité électrique qui est inférieure à 10⁻⁸ s/m.

5. Limiteur de couple (1) selon l'une quelconque des revendications 1 à 4, **caractérisé en ce qu'**un premier disque isolant (22) est disposé entre le support de disques de sortie (9) et un disque entraîneur (17) fixé à demeure sur le composant de sortie de couple de manière à les maintenir à l'écart l'un de l'autre dans la direction axiale et/ou dans la direction radiale.

6. Limiteur de couple (1) selon l'une quelconque des revendications 1 à 5, **caractérisé en ce qu'**un deuxième disque isolant (38) est disposé entre le support de disques de sortie (9) et un composant de boîtier (14), rendant étanche par rapport à l'environnement l'embrayage à friction (5), fixé à demeure sur le composant de sortie de couple de manière à les maintenir à l'écart l'un de l'autre dans la direction axiale et/ou dans la direction radiale.

7. Limiteur de couple (1) selon l'une quelconque des revendications 1 à 6, **caractérisé en ce qu'**un troisième disque isolant (40) est disposé entre le composant d'entrée de couple (2) et le composant de sortie de couple (8) de manière à les maintenir à l'écart l'un de l'autre et également solidaire en rotation avec ces composants accouplés (11, 12, 14, 17) dans la direction axiale et/ou dans la direction radiale.

8. Limiteur de couple (1) selon la revendication 7, **caractérisé en ce que** le troisième disque isolant (40) est tendu dans la direction axiale entre le composant d'entrée de couple (2) et le composant de sortie de couple (8).

9. Limiteur de couple (1) selon l'une quelconque des revendications 1 à 8, **caractérisé en ce que** le composant d'entrée de couple (2) comporte une section de moyeu (15) à denture intérieure ou à denture extérieure pour s'engrener dans un arbre de sortie (11) du moteur électrique (3) ou une ouverture (48) pour le montage par complémentarité de forme et/ou à force sur un rotor (50) du moteur électrique (3).

10. Chaîne cinématique pour un véhicule à moteur, comprenant un moteur électrique (3) qui comporte un arbre de sortie (11) pour transmettre un couple produit par le moteur électrique (3), un limiteur de couple (1) selon l'une quelconque des revendications 1 à 9, dans laquelle le composant d'entrée de couple (2) du limiteur de couple (1) est accouplé en transmission de couple à l'arbre de sortie (11) et une boîte de vitesses (4) qui comporte un arbre d'entrée (12) séparé de l'arbre de sortie (11), l'arbre d'entrée (12) étant accouplé en transmission de couple au composant de sortie de couple (8) du limiteur de couple (1).
